(19) Europäisches Patentamt
European Patent Office
Office européen des brevets

(11) Veröffentlichungsnummer: **0 002 285**
**B1**

(12) **EUROPÄISCHE PATENTSCHRIFT**

(45) Veröffentlichungstag der Patentschrift: **06.10.82**

(51) Int. Cl.³: **C 08 F 8/44,** C 08 F 8/28, D 06 P 1/52, D 06 P 1/44

(21) Anmeldenummer: **78101556.5**

(22) Anmeldetag: **04.12.78**

(54) **Verfahren zur Herstellung von vernetzten Copolymerisaten sowie Verwendung der so erhaltenen Produkte im Textildruck.**

(30) Priorität: **05.12.77 DE 2754058**

(43) Veröffentlichungstag der Anmeldung: **13.06.79 Patentblatt 79/12**

(45) Bekanntmachung des Hinweises auf die Patenterteilung: **06.10.82 Patentblatt 82/40**

(84) Benannte Vertragsstaaten: **BE CH DE FR GB IT NL SE**

(56) Entgegenhaltungen:
**DE-B-1 005 730**
**FR-A-1 389 274**
**US-A-3 784 597**

**Die Akte enthält technische Angaben, die nach dem Eingang der Anmeldung eingereicht wurden und die nicht in dieser Patentschrift enthalten sind.**

(73) Patentinhaber: **CASSELLA Aktiengesellschaft, Hanauer Landstrasse 526, D-6000 Frankfurt am Main 61 (DE)**

(72) Erfinder: **Balzer, Juliane, Steinauerstrasse 4, D-6000 Frankfurt am Main 61 (DE)**
Erfinder: **Engelhardt, Friedrich, Dr., Hünfelderstrasse 20, D-6000 Frankfurt am Main 61 (DE)**
Erfinder: **Ribka, Joachim, Dr., Rügenerstrasse 4, D-6050 Offenbach-Bürgel (DE)**
Erfinder: **Schidlo, Wolfram, Dr., Nelkenweg 14, D-6239 Diedenbergen (DE)**

(74) Vertreter: **Urbach, Hans-Georg, Dr. et al, Hanauer Landstrasse 526, D-6000 Frankfurt am Main 61 (DE)**

**EP 0 002 285 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Herstellung von vernetzten Copolymerisaten sowie Verwendung der so erhaltenen Produkte im Textildruck

Die vorliegende Erfindung betrifft ein Verfahren zur Herstellung von vernetzten Copolymerisaten, deren Polymerenketten folgende Zusammensetzung aufweisen:

k−p Mol.-% Gruppen der Formel 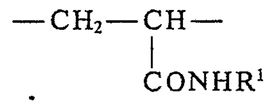

p Mol.-% Gruppen der Formel 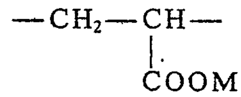

0 bis 45 Mol.-% Gruppen der Formel 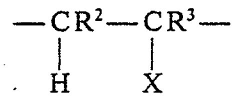

und 0,1 bis 20 Mol.-% eines Vernetzers,

wobei

$R^1$ im statistischen Mittel zu 0 bis 100% Wasserstoff und zu 100 bis 0%, jeweils bezogen auf den Anteil von k − p Mol-%, $-CH_2OH$-Gruppe,
$R^2$ und $R^3$ Wasserstoff oder einer der Reste $R^2$ und $R^3$ eine Methylgruppe, der andere Wasserstoff,
X Cyan, Alkoxycarbonyl mit insgesamt 1 bis 8 C-Atomen im Alkoxyrest, Alkoxycarbonyl, dessen Alkoxyrest durch −OH substituiert ist und 2 bis 8 C-Atome besitzt, −COOM, Alkanoyloxy mit insgesamt 2 bis 6 C-Atomen, Alkanoylamino mit insgesamt 2 bis 8 C-Atomen, das, sofern es mindestens 4 C-Atome besitzt, auch cyclisch sein kann und dann einen Pyrrolidon-, Piperidon- oder Caprolactamring bildet, Phenyl oder Trialkoxysilyl mit 1 bis 2 C-Atomen in den Alkoxylgruppen,
M ein Alkalimetall-Kation bedeuten und
k für den Bereich 99,9 bis 50 und
p für den Bereich 5 bis k stehen

durch Copolymerisation von Acrylamid, anschließende partielle alkalische Hydrolyse und gegebenenfalls Methylolierung und ihre Verwendung als Verdickungsmittel beim Textildruck.

Es ist bekannt, vernetzte Copolymerisate durch Copolymerisation von Acrylamid mit mehrfach olefinisch ungesättigten Verbindungen in wäßriger Lösung herzustellen. Die so erhaltenen vernetzten Copolymeren sind in Wasser noch quellbar, aber nicht mehr löslich. Aus der US-PS 3 210 310, der französischen Patentschrift 1 411 944 ist die Bodenverfestigung durch Copolymerisation von wäßrigen Monomerenlösungen in der zu verfestigenden Bodenformation beschrieben worden.

Führt man die Copolymerisation mit den aus diesen Druckschriften bekannten Monomerenzusammensetzungen durch und isoliert die so erhaltenen, vernetzten Copolymeren, so erhält man pulverförmige Produkte, welche in Wasser nur ein schwaches Quellvermögen aufweisen.

Es ist auch bereits bekannt, wasserunlösliche, aber in Wasser quellbare Copolymerisate in fester Form durch Fällungspolymerisation in organischen Lösungsmitteln herzustellen, wobei

a) Verbindungen, welche mindestens zwei olefinisch ungesättigte polymerisierbare Gruppen enthalten, wie z. B. Äthandiol-diacrylat oder Divinylbenzol,
b) wasserlösliche polymerisierbare Verbindungen wie Acrylsäure oder Acrylamid und gegebenenfalls
c) wasserunlösliche Monomere wie Methyl-methacrylat oder Styrol

als Ausgangsmaterialien eingesetzt werden. Hierbei werden jedoch inhomogene Polymerisate erhalten, die Partikel von unterschiedlichem Quellvermögen enthalten. Aus der deutschen Patentschrift 1 042 233 sind vernetzte Copolymerisate bekannt, die mindestens 25 Gewichts-% einer niederen aliphatischen $\alpha,\beta$-ungesättigten Carbonsäure oder eines Anhydrids einer niederen aliphatischen ungesättigten Polycarbonsäure, 0 bis 75 Gewichts-% eines davon verschiedenen monoolefinischen Monomeren und 0,1 bis 30%, bezogen auf das Gewicht der Carbonsäure bzw. Carbonsäureanhydride, eines Polyvinyl-, Polyallyl- oder Polycrotyläthers eines mehrwertigen Alkohols mit wenigstens 4 C-Atomen und wenigstens 3 OH-Gruppen im Molekül, welcher Äther wenigstens 2 Vinyl-, Allyl- oder Crothyläthergruppen im Molekül aufweist, einpolymerisiert enthalten.

Ein gravierender Nachteil dieses bekannten Verfahrens besteht darin, daß es nur zu Polymerisaten mit freien Carboxylgruppen führt. Diese Verbindungen haben jedoch nur ein beschränktes

Wasserbindungsvermögen, d. h. eine relativ geringe Quellfähigkeit. Um hoch quellbare Substanzen zu erhalten, ist es erforderlich, die nach dem bekannten Verfahren hergestellten Polymerisate, die häufig eine zähe kautschukartige Beschaffenheit haben, mit Alkali zu mazerisieren. Hierbei wird dann eine Gallerte erhalten, die durch weiteren Wasserzusatz auf die gewünschte Viskosität eingestellt werden kann. Dieses umständliche Verfahren stellt eine erhebliche Beeinträchtigung der Verwendung dieser bekannten Verdickungsmittel dar. Eine weitere Schwierigkeit der Anwendung der bekannten Verdickungsmittel besteht darin; daß sie, um ihre maximale Wirkung zu entfalten, nicht vollständig in die Salze überführt werden dürfen, sondern nur zu einem bestimmten definierten Bruchteil. Hierbei ergibt sich die erhebliche Schwierigkeit, daß beim Mazerisieren das Alkali, welches gegenüber den Carboxylgruppen im Unterschuß vorhanden ist, allmählich von außen nach innen in ein vorgequollenes vernetztes Polymerisat hineindiffundieren muß. Dies erfordert nicht nur einen hohen Zeitaufwand, sondern es führt auch notwendigerweise zu einem ungleichmäßigen, nämlich von außen nach innen abnehmenden Neutralisationsgrad des Polymerenpartikels. Dies hat zur Folge, daß die Quellbarkeit nicht optimal ist und die mit den Produkten erhaltenen Verdickungen eine körnige ungleichmäßige Struktur aufweisen. Auch die Verdickungswirkung selbst der bekannten Produkte ist aufgrund der anwendungstechnischen Schwierigkeiten ungleichmäßig und relativ gering. Neben den anwendungstechnischen Nachteilen der gemäß der deutschen Patentschrift 1 042 233 herstellbaren vernetzten Copolymerisate weist auch das Herstellungsverfahren selbst verfahrenstechnische Mängel und Schwierigkeiten auf, die besonders bei seiner großtechnischen Realisierung Gefahrenmomente mit sich bringen und zu Störungen führen können. Das bekannte Verfahren kann nämlich wegen des Einsatzes von monomerer Acrylsäure bei der Copolymerisation nur in relativ niedrigsiedenden Kohlenwasserstoffen ausgeführt werden, die bekanntlich einen sehr niedrigen Flammpunkt haben und daher in der Technik nur ungern als Lösungsmittel verwendet werden. Weiterhin werden bei der Copolymerisation häufig sehr feinkörnige, fast schlammartige Polymerisate erhalten, deren Filtration nicht immer glatt zu bewerkstelligen ist, sondern die häufig die Poren der Filter verstopfen und damit zu Störungen des Produktionsablaufes Anlaß geben.

Es wurde nun gefunden, daß man die Schwierigkeiten der bekannten Herstellungsverfahren vermeiden kann und darüber hinaus Produkte erhält, die ohne Schwierigkeiten angewendet werden können und in der Wirkung und der Qualität der erhaltenen Verdickungen den bisher bekannten Produkten wesentlich überlegen sind, wenn man vernetzte Copolymerisate, deren Polymerenketten folgende Zusammensetzung aufweisen:

k−p Mol.-% Gruppen der Formel 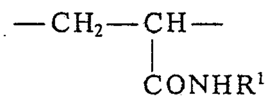

p Mol.-% Gruppen der Formel 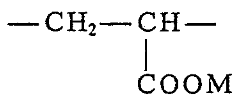

0 bis 45 Mol.-% Gruppen der Formel 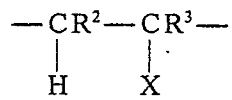

und 0,1 bis 20 Mol.-% eines Vernetzers,

wobei

- $R^1$ im statistischen Mittel zu 0 bis 100% Wasserstoff und zu 100 bis 0% jeweils bezogen auf den Anteil von k−p Mol-%, $-CH_2OH$-Gruppen,
- $R^2$ und $R^3$ Wasserstoff, oder einer der Reste $R^2$ und $R^3$ eine Methylgruppe, der andere Wasserstoff,
- X Cyan, Alkoxycarbonyl mit insgesamt 1 bis 8 C-Atomen im Alkoxyrest, Alkoxycarbonyl, dessen Alkoxyrest durch −OH substituiert ist und 2 bis 8 C-Atome besitzt, −COOM, Alkanoyloxy mit insgesamt 2 bis 6 C-Atomen, Alkanoylamino mit insgesamt 2 bis 8 C-Atomen, das, sofern es mindestens 4 C-Atome besitzt, auch cyclisch sein kann und dann einen Pyrrolidon-, Piperidon- oder Caprolactamring bildet, Phenyl oder Trialkoxysilyl mit 1 bis 2 C-Atomen in den Alkoxygruppen,
- M ein Alkalimetall-Kation bedeuten und
- k für den Bereich 99,9 bis 50,
- p für den Bereich 5 bis k stehen,

in der Weise herstellt, daß man, bezogen auf die gesamte Molmenge aller Monomeren, k Mol-% Acrylamid, wobei k die oben angegebene Bedeutung hat, 0 bis 45 Mol-% einer Verbindung der Formel I

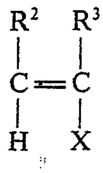

(I)

worin $R^2$, $R^3$ und X die oben angegebenen Bedeutungen haben, und 0,1 bis 20 Mol-% eines Vernetzers in Gegenwart eines radikalischen Initiators in einem mit Wasser mischbaren Alkanol mit 1 bis 4 C-Atomen, der nicht mehr als 10% Wasser enthält, copolymerisiert, die erhaltene Polymerisatdispersion unter Einwirkung starker Scherkräfte mit p Mol-% eines Alkalihydroxyds der Formel MOH, worin p die oben angegebene Bedeutung hat, mischt und bis zur Verseifung von p Mol-% Amidgruppen zu —COOM-Gruppen auf 30 bis 150°C erwärmt und das erhaltene Copolymerisat entweder isoliert oder, nach Entfernung des Ammoniaks, in einem niederen Alkanol mit 0 bis (k—p) Mol-% Paraformaldehyd, wobei k und p die obengenannten Bedeutungen haben, bei Temperaturen zwischen 10°C und dem Siedepunkt des eingesetzten niederen Alkanols methyloliert.

Beispiele für Verbindungen der Formel I, die bei der erfindungsgemäßen Copolymerisation mitverwendet werden können, sind: Acrylnitril, Methacrylnitril, Crotonsäurenitril, Methyl-, Äthyl-, $\beta$-Hydroxyäthyl-, Propyl-, $\beta$-Hydroxypropyl-, Isopropyl-, (n)-Butyl-, Isobutyl-, sec.Butyl-, tert.Butyl-, Pentyl-, Hexyl-, 2-Äthyl-hexyl-acrylat; Acrylsäure; Methyl-, Äthyl, $\beta$-Hydroxyäthyl-, Propyl-, $\beta$-Hydroxypropyl-, Isopropyl-, (n)Butyl-, Isobutyl-, sec.Butyl-, tert.Butyl-, Pentyl-, Hexyl-, 2-Äthyl-hexyl-methacrylat; Methyl-, Äthyl-, Propyl-, Isopropyl-, (n)Butyl-, 2-Äthyl-hexyl-crotonat; Vinylacetat, Vinylpropionat, Vinylbutyrat, Vinylcapronat, 3-Allyl($\Delta$1,2)-acetat, -propionat, -butyrat; N-Vinyl-acetamid, -propionamid, -butyramid; N-Vinyl-pyrrolidon, -piperidon, -caprolactam; N-($\Delta$1,2)Allyl-(3)-acetamid, -pyrrolidon, -piperidon, -caprolactam; Styrol, Trimethoxysilyläthylen, Triäthoxysilyläthylen, 1- oder 3- Trimetoxysilyl-propylen($\Delta$1,2), 1- oder 3-Triäthoxysilyl-propylen($\Delta$1,2).

Sofern bei der Copolymerisation Verbindungen der Formel I mitverwendet werden, sind solche bevorzugt, bei denen $R^2$ Wasserstoff, $R^3$ Wasserstoff oder Methyl und X Cyan, Alkoxycarbonyl mit 1—8 C-Atomen, dessen Alkoxyrest noch durch —OH substituiert sein kann, Acetoxy, N-Pyrrolidonyl, Phenyl oder Triäthoxysilyl bedeuten.

Im Hinblick auf die anwendungstechnischen Eigenschaften bei der Verwendung als Verdicker im Pigmentdruck sowie mit Rücksicht auf den Preis der Produkte ist es bevorzugt, höchstens 20%, insbesondere aber gar keine Verbindungen der Formel I, bei der Copolymerisation mitzuverwenden.

Eine weitere bevorzugte Gruppe erfindungsgemäß herstellbarer vernetzter Copolymerisate ist dadurch gekennzeichnet, daß p einen Wert von 30 bis 70 aufweist, d. h. daß die Polymerisate, bezogen auf die Gesamt-Molzahl der copolymerisierten Monomeren, 30 bis 70 Mol-% —COOM-Gruppen enthält. Derartige bevorzugte erfindungsgemäße Copolymerisate zeichnen sich durch optimale Verdickungswirkung bei gleichzeitig minimaler Elektrolytempfindlichkeit aus.

Als Vernetzer werden bei der erfindungsgemäßen Copolymerisation mehrfach olefinisch ungesättigte Verbindungen eingesetzt, wie z. B. Divinylbenzol, Tetraallyloxäthan, Diallyläther, Allyläther polyfunktioneller Alkoholkomponenten, wie z. B. Di- und Tri-allyl-glycerinäther sowie Allyläther, die sich von Alkoholen der Zuckerreihe ableiten, etwa dem Erythrit, penta-Erythrit, Arabit, Mannit, Sorbit oder der Glucose. Als besonders geeignet erwiesen sich Polyglycerinpolyallyl- und -polymethallyläther der allgemeinen Formel II

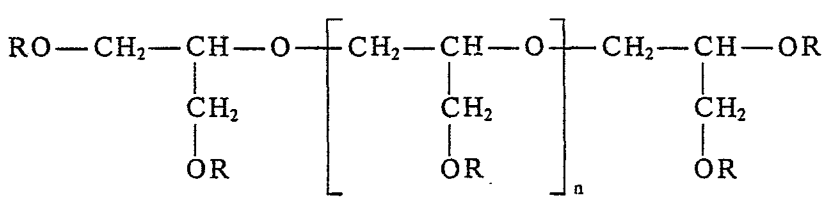

(II)

worin n für eine Zahl von 0 bis 30, vorzugsweise 1 bis 10, steht und R zu 70—5% Wasserstoff und zu 95—30% Gruppen der Formeln $-CH_2-CH=CH_2$ oder $-CH_2-C(CH_3)=CH_2$ bedeutet.

Derartige Polyglycerinpolyallyl- bzw. -polymethallyläther werden in an sich bekannter Weise durch Umsetzung von Polyglycerinen — hergestellt z. B. durch Polykondensation von Glycid- mit Allylchlorid oder Methallylchlorid erhalten.

Die Copolymerisation des Acrylamids der Verbindung der Formel I und des Vernetzers erfolgt in einem wasserlöslichen Alkanol mit 1 bis 4 C-Atomen, wie Methanol, Äthanol, Propanol, Isopropanol, vorzugsweise in tert.Butanol als Lösungsmittel.

Der Wassergehalt der als Lösungsmittel eingesetzten niederen Alkanole sollte 10 Gewichts-% nicht überschreiten, da sonst eine Klumpenbildung bei der Polymerisation auftreten kann. Vorzugsweise wird bei einem Wassergehalt von 0—5% gearbeitet.

Die Menge des einzusetzenden Lösungsmittels richtet sich bis zu einem gewissen Grad nach der Art der eingesetzten Comonomeren.

In der Regel werden pro 100 g Gesamtmonomere 200 bis 1000 g des Lösungsmittels eingesetzt.

Wie üblich wird die Polymerisation in einer Schutzgasatmosphäre, vorzugsweise unter Stickstoff, ausgeführt. Die Polymerisationstemperatur liegt zwischen 20 und 120° C, vorzugsweise 40 bis 80° C.

Zur Auslösung der Polymerisation können die üblichen Polymerisationsinitiatoren herangezogen werden, z. B. organische Peroxide, wie Benzoylperoxid, tert.Butyl-hydroperoxid, Methyläthyl-ketonperoxid, Cumol-hydroperoxid. Auch Azoverbindungen wie Azo-di-iso-butyro-nitril können mit Erfolg verwendet werden. Als vorteilhaft erwiesen sich vor allem Redoxysysteme, welche als reduzierende Komponente aliphatische und aromatische Sulfinsäuren, wie Benzolsulfinsäure und Tulolsulfinsäure oder Derivate dieser Säuren enthalten, wie z. B. Mannichaddukte aus Sulfinsäuren, Aldehyden und Aminoverbindungen, wie sie in der deutschen Patentschrift 1 301 566 beschrieben sind. Pro 100 g Gesamtmonomeren werden in der Regel 0,05 bis 2 g des Polymerisationsinitiators eingesetzt.

Bei der Durchführung der Copolymerisation in der beschriebenen Weise erhält man gut rührbare Polymerisatpasten, die ohne weiteres für die anschließende Umsetzung mit Alkalihydroxyden geeignet sind. Selbstverständlich ist es auch möglich, das erhaltene Copolymerisat beispielsweise durch Absaugen und Waschen mit dem verwendeten Lösungsmittel zwischenzuisolieren.

Die bei der Polymerisation erhaltene Polymerisatpaste, die in der Regel eine leicht körnige Beschaffenheit aufweist, wird zunächst in einer geeigneten Apparatur starken Scherkräften unterworfen, z. B. durch Rühren mit einem Schnellrührer (Ultra-Turrax) oder Mahlen in einer PUC-Mühle, bis ein völlig gleichmäßiges Fließverhalten der Suspension erreicht ist, dann wird die gewünschte Menge des Alkalihydroxyds unter anhaltender weiterer kräftiger Durchmischung zugefügt, wobei je nach verwendetem Misch- bzw. Mahlaggregat ein weiterer Zusatz von 0 bis 200 ml des verwendeten Lösungsmittels, bezogen auf 100 g Copolymerisat, erforderlich werden kann.

Die in der beschriebenen Weise erhaltene Mischung der Polymerisatdispersion mit dem Metallhydroxyd wird anschließend so lange unter Rühren auf 30 bis 150°C erwärmt, bis der gewünschte Verseifungsgrad erhalten ist.

Zur Herstellung eines Copolymerisats mit p Mol-% —COOM-Gruppen werden zur Verseifung auch p Mol-% des Alkalihydroxyds eingesetzt. Die bevorzugte Verseifungstemperatur liegt bei 50 bis 100°C.

Besonders vorteilhaft ist es, die Verseifung bei der Siedetemperatur des Reaktionsgemisches am Rückflußkühler durchzuführen.

Das Alkalimetall-hydroxyd wird der Copolymerisatdispersion zweckmäßigerweise in fein gemahlener Form zugefügt.

Als Alkalihydroxyde werden Natriumhydroxyd und Kaliumhydroxyd bevorzugt.

Bei diesen Reaktionsbedingungen dauert die Verseifung ca. 1 bis 6 Stunden.

Das erfindungsgemäße Verfahren ist im Prinzip auch ohne die Einwirkung hoher Scherkräfte auf die Copolymerisatdispersion vor und während der Alkalizugabe durchführbar. Das Arbeiten unter Einwirkung der Scherkräfte ist jedoch besonders bevorzugt, weil die nach dieser Ausführungsform hergestellten Produkte nicht nur wesentlich homogenere Verdickungen liefern, sondern auch ca. zehnmal wirksamer sind als Produkte, die ohne Einsatz hoher Scherkräfte hergestellt worden sind.

Dieser Effekt des Einsatzes hoher Scherkräfte bei der erfindungsgemäßen Herstellung der Copolymerisate ist deswegen so überaus überraschend, weil bekannt ist, daß die Einwirkung hoher Scherkräfte auf Polyacrylamide zu einem sprunghaften Abbau des mittleren Molekulargewichts und damit zu einem drastischen Rückgang der Viskosität führt (vgl. z. B. Bestul, Journal of Chemical Physics, Band 24, Seiten 1196 bis 1201, Journal of Applied Physics, Band 25, Seiten 1069 bis 1074).

Die unvorhersehbare und überraschende Tatsache, daß das Arbeiten unter Einwirkung hoher Scherkräfte beim erfindungsgemäßen Verfahren zu Produkten mit drastisch verbesserten Eigenschaften führt, bedingt den besonderen Wert dieser bevorzugten Verfahrensmaßnahme.

Sollen erfindungsgemäße vernetzte Copolymerisate hergestellt werden, in denen die vorhandenen $R^1$-Gruppen zu 100% Wasserstoff bedeuten, so wird das Copolymerisat nach Abschluß der Verseifungsreaktion entweder durch Abdampfen des verwendeten Lösungsmittels oder durch Absaugen der Dispersion und Nachwaschen des Polymerisats mit dem eingesetzten Lösungsmittel oder einem leichter flüchtigen niederen Alkanol isoliert und anschließend, vorzugsweise im Vakuum, bei 40 bis 80°C getrocknet. Man erhält auf diese Weise ein feinpulvriges Copolymeres der oben angegebenen Zusammensetzung, welches unmittelbar als Verdickungsmittel eingesetzt werden kann. Hierzu ist es lediglich erforderlich, die gewünschte Menge des Pulvers in die erforderliche Wassermenge einzurühren. Man erhält völlig homogene glasklare hochviskose Lösungen oder Gallerten, die in hohem Maße formbeständig sind.

Zur Herstellung erfindungsgemäßer vernetzter Copolymerisate, in denen R im statistischen Mittel zu einem gewissen Prozentsatz die Methylolgruppe bedeutet, d. h. Copolymerisate, deren Amidgruppen ganz oder teilweise methyloliert sind, werden die nach der Verseifung erhaltenen Copolymerisate in einem wasserlöslichen Alkanol von 1—4 C-Atomen mit der dem gewünschten Methylolierungsgrad entsprechenden Menge Paraformaldehyd umgesetzt. Für diese Umsetzung können die nach der Verseifung isolierten erfindungsgemäß hergestellten Copolymerisate verwendet werden. Sie werden zu diesem Zweck in der 3- bis 10fachen Gewichtsmenge des als Lösungsmittel eingesetzten Alkanols suspendiert, mit der berechneten Menge Paraformaldehyd versetzt, und die Mischung bei einer Temperatur zwischen 10°C und dem Siedepunkt des als Lösungsmittel verwendeten Alkanols

methyloliert.

Im Fall, daß erfindungsgemäße Copolymere, in denen die vorhandenen $R^1$-Gruppen zu 100% $-CH_2OH$ sind, hergestellt werden sollen, d. h., daß alle verfügbaren Carbonamidgruppen methyloliert werden sollen, kann auch ein Überschuß von Paraformaldehyd von bis zu 20% eingesetzt werden.

Die Reaktionsdauer richtet sich hierbei nach der Reaktionstemperatur, und es ist daher bevorzugt, zur Erzielung wirtschaftlicher Reaktionszeiten die Methylolierung bei Temperaturen zwischen 40° C und dem Siedepunkt des Lösungsmittels, insbesondere bei 50–60° C, durchzuführen.

Zur Herstellung erfindungsgemäßer methylolierter Copolymerisate ist es jedoch keineswegs erforderlich, die Copolymerisate nach der Verseifung zu isolieren, vielmehr können die bei der Verseifung erhaltenen Polymerisatdispersionen direkt weiterverarbeitet werden, wenn dafür gesorgt wird, daß das bei der Verseifung entstandene Ammoniak aus dem Reaktionsgemisch entfernt wird. Dies kann im einfachsten Fall durch Abdestillieren eines Teils des als Lösungsmittel eingesetzten Alkanols erfolgen. Ein zu starkes Eindicken der Polymerisatdispersion kann durch Zusatz frischen Lösungsmittels vermieden werden, auch kann das Austreiben des Ammoniaks durch nochmaligen oder mehrmaligen Zusatz frischen Lösungsmittels und Abdestillieren vervollständigt werden.

Eine ebenfalls recht zweckmäßige Ausführungsform der Methylolierung besteht darin, daß man das Reaktionsgemisch nach Zusatz des Paraformaldehyds bei Zimmertemperatur über Nacht reagieren läßt.

Erfindungsgemäße vernetzte Copolymerisate, bei denen $R^1$ im statistischen Mittel zum Teil Methylolgruppen bedeutet, d. h. deren Amidgruppen ganz oder teilweise, vorzugsweise zu 80 bis 100%, methyloliert sind, zeigen ganz besondere Vorteile beim Einsatz als Verdickungsmittel im textilen Pigmentdruck. Man erhält in diesem Fall Drucke von ganz besonders hoher Naß- und Trockenreibechtheit und hervorragender Brillanz. Auch die sonstigen relevanten Eigenschaften der Pigmentdrucke, wie z. B. Konturenschärfe, Naß- und Trockenreinigungsechtheit, Lichtechtheit, Schweißechtheit und Griff sind sehr gut, so daß die Kombination aller wesentlichen Eigenschaften der unter Verwendung erfindungsgemäßer Verdickungsmittel hergestellten Pigmentdrucke den unter Verwendung bekannter Verdickungsmittel hergestellten Pigmentdrucken wesentlich überlegen sind.

Für die Anwendung der erfindungsgemäß herstellbaren Polymerisate im textilen Pigmentdruck ergibt sich ein weiterer Vorteil dadurch, daß es nicht erforderlich ist, das Copolymerisat aus dem Reaktionsansatz zu isolieren, sondern es ist möglich, die Formulierung der Pigmentdruckpaste direkt unter Einsatz der rohen bei der Herstellung anfallenden Polymerisatdispersion auszuführen und erst anschließend den als Lösungsmittel verwendeten Alkohol abzudestillieren.

In den Tabellen 1 und 2 sind die in den Polymeren enthaltenen Anteile der Gruppen

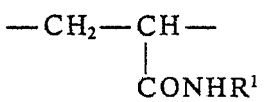

mit $R^1$ = Wasserstoff und $R^1 = -CH_2OH$ jeweils auf das gesamte Polymerenmolekül bezogen. Soll aus diesen Angaben (Spalte »$R^1$ = H« und »$R^1 = CH_2OH$«) der statistische Anteil $A_H$ der Wasserstoff und $A_F$ der $-CH_2OH$ bedeutenden Reste $R^1$, bezogen auf den Anteil von k–p Mol-% berechnet werden, so gelten die Beziehungen

$$A_H = \frac{(\text{Angabe Spalte »}R^1 = \text{H«}) \cdot 100}{(\text{Angabe Spalte »}R^1 = \text{H«}) + (\text{Angabe Spalte »}R^1 = CH_2OH\text{«})},$$

$$A_F = \frac{(\text{Angabe Spalte »}R^1 = -CH_2OH\text{«}) \cdot 100}{(\text{Angabe Spalte »}R^1 = \text{H«}) + (\text{Angabe Spalte »}R^1 = -CH_2OH\text{«})},$$

Für die eingesetzten Vernetzer sind in den Tabellen 1 und 2 die folgenden Abkürzungen benutzt worden:

A = Polyglycerin-polyallyläther
B = Polyglycerin-polymethallyläther
C = Glucosepolyallyläther
D = Tetraallyloxäthan
E = Trisacryloylperhydro-s-triazin
F = Butandioldimethacrylat

## Beispiel 1

In einem Reaktionsgefäß, ausgestattet mit Rührer, Rückflußkühler, Thermometer, Gaseinleitungsrohr, Tropftrichter und elektrisch beheizbarem Wasserbad, werden 440 ml Butanol tert. und 16 ml

Wasser entionisiert vorgelegt und darin unter Rühren 71 g Acrylamid gelöst. Dieser Lösung werden nun 0,7 g eines Polyallyläthers zugesetzt, welcher durch Umsetzung eines Polyglycerins mit einem Molekulargewicht von 1270 und einer OH-Zahl von 680 mit Allylchlorid in wäßrig alkalischem Medium hergestellt worden ist.

Unter Einleitung eines schwachen Stickstoffstromes wird die Monomerenlösung gerührt und die Temperatur mit Hilfe des elektrischen Wasserbades auf 50° C gebracht. Bei dieser Temperatur wird nun durch einen Tropftrichter im Verlauf von 15 Min. eine Lösung von 1,0 g Azodiisobutyronitril in 70 ml tert. Butanol zugetropft. Etwa 5 Min. nach beendeter Katalysator-Zugabe setzt die Polymerisationsreaktion ein. Das Polymere fällt dabei als weiße breiartige Masse aus, wobei die Temperatur im Verlauf von 30 Min. bis auf 79° C ansteigt. Nach beendeter Polymerisation, d. h. wenn die Reaktionstemperatur absinkt, wird unter Rühren noch 2 Stunden bei 90° C Badtemperatur nachgeheizt.

Nach Abkühlen des Reaktionsgemisches auf 30–40° C wird der Reaktionskolben mit einem Homogenisiergerät ausgerüstet oder die Polymerisatdispersion über ein Homogenisiergerät umgepumpt.

Es werden nun unter der Einwirkung starker Scherkräfte 20 g NaOH pulverförmig sowie 100 bis 200 ml tert. Butanol zugesetzt, wobei eine homogene, gut rührbare weiße Dispersion entsteht, die nun 4 Stunden unter Rückfluß erhitzt wird, wobei sich Ammoniak abspaltet.

Zur Isolierung des Copolymeren wird die erhaltene homogene weiße Polymerisatdispersion entweder abgesaugt und das Polymere anschließend im Vakuum getrocknet oder das als Reaktionsmedium eingesetzte tert. Butanol wird unter Rühren im Vakuum abdestilliert.

In beiden Fällen wird das Polymerisat mit $p \approx 50$ Mol-% und $k \approx 50$ Mol-% als lockeres weißes Pulver erhalten. Die Ausbeute beträgt 91 g (~100% d. Th.)

Diese Polymerisate zeigen in Wasser ein außerordentlich hohes Quellvermögen und können deshalb als Verdickungsmittel eingesetzt werden.

Eine 0,2%ige wäßrige Zubereitung eines so hergestellten Polymerisates besitzt bei 25° C eine Viskosität von 3200 mPa · s.

Wenn in einem analogen Polymerisatansatz als Katalysatorsystem

0,7 g Dibutylamin Hydrochlorid

0,1 g der Verbindung 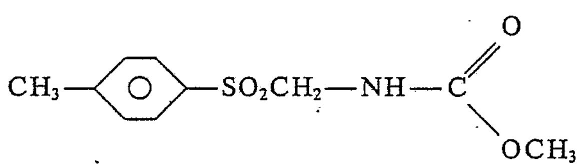

0,2 g $(NH_4)_4S_2O_8$

eingesetzt werden, wird in gleich guter Ausbeute ein Polymerisat erhalten, welches 0,2%ig in Wasser bei 25° C einen Viskositätenwert von 3300 mPa · s zeigt.

Analog Beispiel 1 lassen sich auch die wertvollen Copolymerisate der in der Tabelle 1 angegebenen Zusammensetzung herstellen.

In der vorletzten Spalte der Tabelle ist die Nummer der bei der Messung der Viskosität nach Höppler benutzten Kugel angegeben worden. Die Konzentration der Meßlösung wurde in Gew.-% in der letzten Spalte aufgeführt.

Tabelle 1

| Nr. | 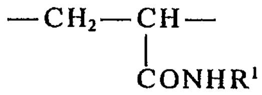 R¹ = H [Mol-%] | R¹ = −CH₂OH [Mol-%] | 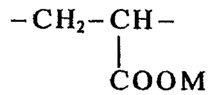 [Mol-%] | 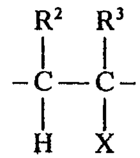 R² | R³ | X | Mol-% | Vernetzer [Mol-%] | Ausbeute [% d. Th.] | Viscosität [m Pa · s] | Kugel | Gehalt der Meßlösung |
|---|---|---|---|---|---|---|---|---|---|---|---|---|
| 1 | 86,95 | – | 6,05 | – | – | – | – | F 7 | 100 | 27 | 3 | 0,2 |
| 2 | 78,30 | – | 11,70 | – | – | – | – | E 10 | 100 | 16 | 3 | 0,1 |
| 3 | 40,85 | – | 54,15 | – | – | – | – | C 5 | 100 | 64 | 3 | 0,1 |
| 4 | 7,50 | – | 89,99 | – | – | – | – | C 2,5 | 100 | 240 | 3 | 0,2 |
| 5 | – | – | 98 | – | – | – | – | C 2 | 100 | 580 | 3 | 0,2 |
| 6 | 32,77 | – | 54,15 | H | H | $—CO_2CH_3$ | 8,07 | D 5 | 100 | 70 | 3 | 0,1 |
| 7 | 24,00 | – | 53,01 | H | H | $—CO_2CH_3$ | 15,99 | E 7 | 100 | 66 | 3 | 0,1 |
| 8 | 33,64 | – | 55,58 | H | H | $—CO_2C_2H_5$ | 8,28 | D 2,5 | 100 | 340 | 3 | 0,1 |
| 9 | 25,02 | – | 55,29 | H | H | $—CO_2C_2H_5$ | 16,63 | D 3 | 93 | 150 | 3 | 0,1 |
| 10 | 33,81 | – | 55,86 | H | H | $—CO_2C_4H_9$ | 8,33 | D 2 | 96 | 990 | 3 | 0,1 |
| 11 | 24,51 | – | 48,45 | H | H | $—CO_2C_4H_9$ | 16,34 | F 5 | 91 | 140 | 3 | 0,1 |
| 12 | 33,98 | – | 56,14 | H | H | 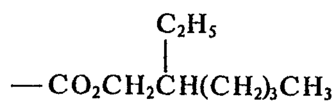 | 8,37 | B 1,5 | 97 | 2000 | 3 | 0,1 |
| 13 | 25,02 | – | 55,29 | H | H | 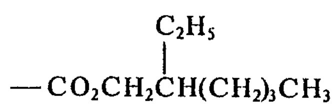 | 16,68 | A 3 | 91 | 420 | 3 | 0,1 |
| 14 | 31,05 | – | 51,30 | H | H | $—CN$ | 7,65 | D 10 | 100 | 16 | 3 | 0,1 |
| 15 | 23,22 | – | 51,30 | H | H | $—CN$ | 15,48 | E 10 | 100 | 81 | 3 | 0,2 |
| 16 | 33,47 | – | 55,29 | H | $CH_3$ | $—CO_2—C_2H_4OH$ | 7,90 | F 3 | 98 | 200 | 3 | 0,1 |
| 17 | 25,54 | – | 56,43 | H | $CH_3$ | $—CO_2—C_2H_4OH$ | 17,02 | C 1 | 94 | 967 | 3 | 0,2 |

Fortsetzung

| Nr. | $-CH_2-CH-$<br>$CONHR^1$<br>$R^1 = H$<br>[Mol-%] | <br><br>$R^1 = -CH_2OH$<br>[Mol-%] | $-CH_2-CH-$<br>$COOM$<br>[Mol-%] | $R^2$ $R^3$<br>$-C-C-$<br>H X<br>$R^2$ | <br><br><br>$R^3$ | <br><br><br>X | <br><br><br>Mol-% | Ver-<br>netzer<br>[Mol-%] | Aus-<br>beute<br>[% d. Th.] | Visco-<br>sität<br>[m Pa · s] | Kugel | Ge-<br>halt<br>der<br>Meß-<br>lö-<br>sung |
|---|---|---|---|---|---|---|---|---|---|---|---|---|
| 18 | 16,77 | – | 55,57 | H | H | $C_2H_5$<br>$-CO_2CH_2CH(CH_2)_3CH_3$ | 25,16 | F 2,5 | 100 | 248 | 3 | 0,2 |
| 19 | 8,16 | – | 54,72 | H | H | $C_2H_5$<br>$-CO_2CH_2CH(CH_2)_3CH_3$ | 33,12 | B 4 | 94 | 50 | 3 | 0,2 |
| 20 | – | – | 45,60 | H | H | $C_2H_5$<br>$-CO_2CH_2CH(CH_2)_3CH_3$ | 34,40 | F 20 | 87 | 9 | 2 | 0,2 |
| 21 | 27,60 | – | 45,60 | H | H | $-O-COCH_3$ | 6,80 | E 20 | 100 | 5 | 2 | 0,2 |
| 22 | 34,15 | – | 56,43 | H | H | $-C_6H_5$ | 8,41 | B 1 | 100 | 6800 | 5 | 0,2 |
| 23 | 23,22 | – | 51,30 | H | H | $-C_6H_5$ | 15,48 | F 10 | 100 | 9 | 3 | 0,2 |
| 24 | 34,15 | – | 56,43 | H | $CH_3$ | $-O_2CH_3$ | 8,41 | B 1 | 100 | 5400 | 5 | 0,2 |
| 25 | 25,02 | – | 55,29 | H | $CH_3$ | $-CO_2CH_3$ | 16,68 | E 3 | 100 | 867 | 4 | 0,2 |
| 26 | 37,82 | – | 55,86 | H | H | $-Si(C_2H_5O)_3$ | 4,31 | A 2 | 100 | 977 | 4 | 0,2 |
| 27 | 33,46 | – | 55,29 | H | H | $-Si(C_2H_5O)_3$ | 8,24 | C 3 | 100 | 78 | 4 | 0,2 |
| 28 | 29,29 | – | 55,29 | H | H | $-Si(C_2H_5O)_3$ | 12,41 | B 3 | 100 | 163 | 4 | 0,2 |
| 29 | 24,25 | – | 53,58 | H | H | $-Si(C_2H_5O)_3$ | 16,17 | F 2 | 97 | 24 | 3 | 0,2 |
| 30 | 25,54 | – | 56,43 | H | H | 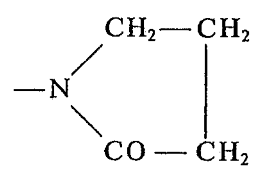 | 17,02 | A 1 | 100 | 8293 | 5 | 0,2 |
| 31 | 60,20 | – | 26,14 | H | H | $-COOH$ | 11,51 | B 1 | 100 | 601 | 4 | 0,2 |

Beispiel 2

Das Beispiel 1 wird wiederholt mit dem Unterschied, daß das Copolymere nach dem vierstündigen Rückflußkochen nicht isoliert wird. Statt dessen werden aus dem Reaktionsgemisch 200 ml tert. Butanol im Vakuum unter Rühren bei 60°C abdestilliert. Dann setzt man unter weiterem Rühren 20 g Paraformaldehyd zu und rührt noch 2 Stunden bei 50°C weiter. Anschließend wird das erhaltene, praktisch 100% methylolierte Copolymerisat wie im Beispiel 1 beschrieben aufgearbeitet.

Die Ausbeute beträgt 97 g (~90% d. Th.).

Eine 0,2%ige wäßrige Zubereitung des erhaltenen Copolymerisats hat bei 25°C eine Viskosität von 3000 mPa · s.

Das Produkt eignet sich hervorragend als Verdicker insbesondere für Pigment-Druckpasten. Die mit diesen Pasten hergestellten Textildrucke stehen außerordentlich scharf und weisen eine überragende Reibechtheit auf.

Beispiel 3

50 g des gemäß Beispiel 1 erhaltenen pulverförmigen erfindungsgemäßen Copolymerisats werden in 120 ml tert.-Butanol unter Rühren suspendiert. Der Suspension werden dann 9 g Paraformaldehyd zugesetzt und die Mischung 2 Stunden bei 50°C gerührt.

Das erhaltene Polymerisat mit $p \approx 50$ Mol-% und einem Methylolierungsgrad von ca. 85% wird, wie im Beispiel 1 beschrieben, aufgearbeitet.

Ausbeute 58 g (~98% d. Th.).

Viskosität der 0,2%igen wäßrigen Zubereitung bei 25°C: 3000 mPa · s.

Analog den Beispielen 2 oder 3 lassen sich auch die wertvollen Copolymerisate der in der Tabelle 2 angegebenen Zusammensetzung herstellen.

Tabelle 2

| Nr. | $-CH_2-CH-$<br>$CONHR^1$<br>$R^1 = H$<br>[Mol-%] | <br><br>$R^1 = -CH_2OH$<br>[Mol-%] | $-CH_2-CH-$<br>$COOM$<br>[Mol-%] | $R^2$ (H) | $R^3$ (X) | X | Mol-% | Ver-netzer<br>[Mol-%] | Aus-beute<br>[% d. Th.] | Visco-sität<br>[m Pa · s] | Kugel | Gehalt der Meß-lö-sung |
|---|---|---|---|---|---|---|---|---|---|---|---|---|
| 1 | – | 50,50 | 46,99 | – | – | – | – | A 2,5 | 99 | 260 | 4 | 0,2 |
| 2 | 10,37 | 37,73 | 48,88 | – | – | – | – | B 3 | 98 | 250 | 4 | 0,2 |
| 3 | 19,50 | 27,72 | 51,77 | – | – | – | – | A 1 | 100 | 31 000 | 6 | 0,2 |
| 4 | 37,62 | 5,94 | 55,44 | – | – | – | – | A 1 | 100 | 23 000 | 6 | 0,2 |
| 5 | 40,09 | 2,97 | 55,93 | – | – | – | – | A 1 | 100 | 25 000 | 6 | 0,2 |
| 6 | 23,75 | 11,21 | 52,25 | H | H | $-CO_2CH_3$ | 7,79 | D 5 | 100 | 79 | 3 | 0,1 |
| 7 | 24,37 | 11,50 | 53,62 | H | H | $-CO_2C_2H_5$ | 7,99 | D 2,5 | 100 | 178 | 3 | 0,1 |
| 8 | 15,68 | 22,54 | 51,94 | H | H | $-CO_2C_4H_9$ | 7,84 | D 2 | 96 | 537 | 3 | 0,1 |
| 9 | 15,84 | 22,77 | 52,47 | H | $CH_3$ | $-CO_2CH_3$ | 7,92 | B 1 | 100 | 5 300 | 5 | 0,2 |
| 10 | 15,52 | 22,31 | 51,41 | H | $CH_3$ | $-CO_2C_2H_4OH$ | 7,76 | F 3 | 98 | 199 | 3 | 0,1 |
| 11 | 14,4 | 20,7 | 47,7 | H | H | $-CN$ | 7,2 | D 10 | 100 | 17 | 3 | 0,1 |
| 12 | 7,2 | 20,7 | 47,7 | H | H | $-CN$ | 14,4 | E 10 | 100 | 107 | 3 | 0,2 |
| 13 | 16,10 | 11,44 | 53,35 | H | H | $C_2H_5$<br>$-CO_2CH_2CH(CH_2)_3CH_3$ | 16,10 | A 3 | 91 | 340 | 3 | 0,1 |
| 14 | – | 86,95 | 6,04 | H | – | – | – | F 7 | 100 | 27 | 3 | 0,2 |
| 15 | – | 78,3 | 11,70 | H | – | – | – | E 10 | 100 | 16 | 3 | 0,1 |
| 16 | – | 40,85 | 54,15 | H | – | – | – | C 5 | 100 | 64 | 3 | 0,1 |
| 17 | – | 7,50 | 89,99 | H | – | – | – | C 2,5 | 100 | 240 | 3 | 0,2 |
| 18 | – | – | 98 | H | – | – | – | C 2 | 100 | 580 | 3 | 0,2 |

Fortsetzung

| Nr. | $—CH_2—CH—$ <br> $CONHR^1$ <br> $R^1 = H$ [Mol-%] | $R^1 = -CH_2OH$ [Mol-%] | $-CH_2-CH-$ <br> $COOM$ <br> [Mol-%] | $R^2$ $R^3$ <br> $-C—C-$ <br> H X <br> $R^2$ | $R^3$ | X | Mol-% | Vernetzer [Mol-%] | Ausbeute [% d. Th.] | Viscosität [m Pa · s] | Kugel | Gehalt der Meßlösung |
|---|---|---|---|---|---|---|---|---|---|---|---|---|
| 19 | – | 32,77 | 54,15 | H | H | $—CO_2CH_3$ | 8,07 | D 5 | 100 | 70 | 3 | 0,1 |
| 20 | – | 23,99 | 53,01 | H | H | $—CO_2CH_3$ | 15,99 | E 7 | 100 | 66 | 3 | 0,1 |
| 21 | – | 33,63 | 55,57 | H | H | $—CO_2C_2H_5$ | 8,28 | D 2,5 | 100 | 340 | 3 | 0,1 |
| 22 | – | 25,02 | 55,29 | H | H | $—CO_2C_2H_5$ | 16,68 | D 3 | 93 | 150 | 3 | 0,1 |
| 23 | – | 33,81 | 49,98 | H | H | $—CO_2C_4H_9$ | 8,33 | D 2 | 96 | 990 | 3 | 0,1 |
| 24 | – | 24,51 | 54,15 | H | H | $—CO_2C_4H_9$ | 16,34 | F 5 | 91 | 140 | 3 | 0,1 |
| 25 | – | 33,98 | 56,14 | H | H | $C_2H_5$ <br> $—CO_2CH_2CH(CH_2)_3CH_3$ | 8,37 | B 1,5 | 97 | 2000 | 3 | 0,1 |
| 26 | – | 25,02 | 55,29 | H | H | $C_2H_5$ <br> $—CO_2CH_2CH(CH_2)_3CH_3$ | 16,68 | A 3 | 91 | 420 | 3 | 0,1 |
| 27 | – | 31,05 | 51,30 | H | H | $—CN$ | 7,65 | D 10 | 100 | 16 | 3 | 0,1 |
| 28 | – | 23,22 | 51,30 | H | H | $—CN$ | 15,48 | E 10 | 100 | 81 | 3 | 0,2 |
| 29 | – | 33,46 | 55,29 | H | $CH_3$ | $—CO_2C_2H_4OH$ | 8,24 | F 3 | 98 | 200 | 3 | 0,1 |
| 30 | – | 25,54 | 56,43 | H | $CH_3$ | $—CO_2C_2H_4OH$ | 17,02 | C 1 | 94 | 967 | 3 | 0,2 |
| 31 | – | 16,77 | 55,60 | H | H | $C_2H_5$ <br> $—CO_2CH_2CH(CH_2)_3CH_3$ | 25,15 | F 2,5 | 100 | 248 | 3 | 0,2 |
| 32 | – | 8,16 | 54,72 | H | H | $C_2H_5$ <br> $—CO_2CH_2CH(CH_2)_3CH_3$ | 34,15 | B 4 | 94 | 50 | 3 | 0,2 |

Fortsetzung

| Nr. | $-CH_2-CH(CONHR^1)-$ $R^1 = H$ [Mol-%] | $R^1 = -CH_2OH$ [Mol-%] | $-CH_2-CH(COOM)-$ [Mol-%] | $-C(R^2)(H)-C(R^3)(X)-$ $R^2$ | $R^3$ | X | Mol-% | Vernetzer [Mol-%] | Ausbeute [% d. Th.] | Viscosität [m Pa · s] | Kugel | Gehalt der Meßlösung |
|---|---|---|---|---|---|---|---|---|---|---|---|---|
| 33 | – | – | 45,60 | H | H | $-CO_2CH_2\overset{C_2H_5}{CH}(CH_2)_3CH_3$ | 34,40 | F 20 | 87 | 9 | 2 | 0,2 |
| 34 | – | 27,60 | 45,60 | H | H | $-O-COCH_3$ | 6,80 | E 20 | 100 | 5 | 2 | 0,2 |
| 35 | – | 34,15 | 54,45 | H | H | $-C_6H_5$ | 8,41 | B 1 | 100 | 6 800 | 5 | 0,2 |
| 36 | – | 23,22 | 51,30 | H | H | $-C_6H_5$ | 15,48 | F 10 | 100 | 9 | 3 | 0,2 |
| 37 | – | 34,46 | 56,94 | H | $CH_3$ | $-CO_2CH_3$ | 8,49 | A 0,1 | 100 | 5 400 | 5 | 0,2 |
| 38 | – | 25,02 | 55,29 | H | $CH_3$ | $-CO_2CH_3$ | 16,68 | E 3 | 100 | 867 | 4 | 0,2 |
| 39 | – | 37,82 | 55,86 | H | H | $-Si(C_2H_5O)_3$ | 4,26 | A 2 | 100 | 977 | 4 | 0,2 |
| 40 | – | 33,46 | 55,29 | H | H | $-Si(C_2H_5O)_3$ | 8,24 | C 3 | 100 | 78 | 4 | 0,2 |
| 41 | – | 29,29 | 55,29 | H | H | $-Si(C_2H_5O)_3$ | 12,41 | B 3 | 100 | 163 | 4 | 0,2 |
| 42 | – | 24,25 | 53,58 | H | H | $-Si(C_2H_5O)_3$ | 16,16 | F 6 | 97 | 24 | 3 | 0,2 |
| 43 | – | 25,54 | 56,43 | H | H | 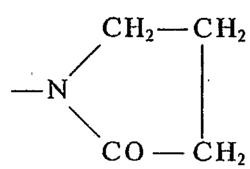 | 17,02 | A 1 | 100 | 8 293 | 5 | 0,2 |

Beispiel 4

Auf ein Baumwollgewebe wird im Flachfilmdruck eine wie folgt herzustellende Druckfarbe in der üblichen Weise aufgebracht.

45 Gewichtsteile der 20%igen Dispersion (hergestellt durch Dispergieren von 20 Gewichtsteilen gemäß Herstellungsbeispiel Nr. 1 erhaltenen Polymerisates in 47 Gewichtsteilen Testbenzin mit einem Siedebereich von 140 – 200° C und 32,2 Gewichtsteilen Testbenzin mit einem Siedebereich von 130 – 175° C unter Zusatz von 0,4 Gewichtsteilen eines Anlagerungsproduktes von 9 Mol Äthylenoxid an 1 Mol Nonylphenol und 0,4 Gewichtsteilen eines Propylenoxid-Äthylenoxid-Blockpolymeren des PrO-EO Molverhältnisses 90 : 10) werden am Schnellrührer in

785 Gewichtsteile Wasser eingerührt. Anschließend werden nacheinander
120 Gewichtsteile einer handelsüblichen, ca. 40%igen Copolymerisat-Dispersion auf Polyacrylatbasis,
15 Gewichtsteile eines Mischharzes auf Melamin-Harnstoff-Formaldehyd-Basis,
25 Gewichtsteile der 37%igen wäßrigen Dispersion des Pigmentes mit der C.I. Nr. 12 485 und
10 Gewichtsteile der 33,3%igen wäßrigen Lösung einer anorganischen säureabspaltenden Verbindung zugegeben.

Der rote Pigmentdruck ist nach dem Trocknen und dem 5minütigen Fixieren bei 150° C auf einer Heißluftapparatur gut reib- und schrubbecht sowie lösungsmittelbeständig und zeichnet sich besonders durch einen weichen Griff aus.

Beispiel 5

Auf ein Baumwollgewebe wird im Rouleauxdruck eine wie folgt herzustellende Druckfarbe in der üblichen Weise aufgebracht.

40 Gewichtsteile der 16%igen Dispersion (hergestellt durch Dispergieren von 16 Gewichtsteilen des nach Beispiel 2 erhaltenen Polymerisates in einem Gemisch aus

50 Tl Testbenzin mit einem Siedebereich von 140 – 200° C
33 Tl Testbenzin mit einem Siedebereich von 130 – 175° C,
1 Tl Sorbitanmonooleat und
1 Tl eines Adduktes von 9 Mol AEO an 1 Mol Nonylphenol)

werden an einem Schnellrührer in

735 Gewichtsteile Wasser eingerührt. Anschließend werden nacheinander
150 Gewichtsteile einer handelsüblichen, ca. 40%igen Copolymerisatdispersion auf Polyacrylatbasis,
15 Gewichtsteile eines Harzes auf Harnstoff-Formaldehyd-Basis,
50 Gewichtsteile einer 32%igen wäßrigen Dispersion des Pigmentes mit C.I. Nr. 74 160 und
10 Gewichtsteile der 33%igen wäßrigen Lösung einer anorganischen säureabspaltenden Verbindung zugegeben.

Der blaue Pigmentdruck hat nach dem Trocknen und dem 2minütigen Fixieren bei 170° C auf einer Heißluftfixier-Apparatur eine gute Reib-, Wasch- und Lösungsmittelbeständigkeit und zeichnet sich insbesondere durch hervorragende Egalität und einen besseren Stand als bei Drucken mit konventionellen Druckpasten aus.

Beispiel 6

Auf ein Polyamid 6.6-Gewebe wird im Rouleauxdruck eine wie folgt herzustellende Druckfarbe in der üblichen Weise aufgebracht.

40 Gewichtsteile der 16%igen Dispersion (hergestellt durch Dispergieren von 16 Gewichtsteilen des nach Beispiel 3 erhaltenen Polymerisats in einem Gemisch aus

50 Tl Testbenzin mit einem Siedebereich von 130 – 175° C,
33 Tl Weißöl (Erdölfraktion) mit einem Siedebereich von 350 – 525° C,
1 Tl Sorbitanmonooleat und
1 Tl eines Adduktes von 12 Mol AEO an 1 Mol Nonylphenol)

werden an einem Schnellrührer in

745 Gewichtsteile Wasser eingerührt. Anschließend werden nacheinander
150 Gewichtsteile einer ca. 40%igen handelsüblichen Copolymerisatdispersion auf Polyacrylat-Basis,
15 Gewichtsteile eines Harzes auf Melamin-Formaldehyd-Basis sowie
40 Gewichtsteile einer 46%igen wäßrigen Dispersion von chloriertem Kupferphthalocyanin und
10 Gewichtsteile einer 33,3%igen wäßrigen Lösung einer anorganischen säureabspaltenden Verbindung aufgebracht.

Der grüne Pigmentdruck ist nach dem Trocknen und dem 5minütigem Fixieren bei 150°C auf einer Heißluftfixierapparatur sehr gut reib- und schrubbecht und besitzt einen weichen Griff; der Druck zeichnet sich durch hohe Brillanz und hervorragende Konturenschärfe gegenüber konventionellen Drucken aus.

## Beispiel 7

Auf ein Baumwollgewebe wird im Flachfilmdruck eine wie folgt herzustellende Druckfarbe in der üblichen Weise aufgebracht.

40 Gewichtsteile der 16%igen Dispersion (hergestellt durch Dispergieren von 16 Gewichtsteilen des nach Beispiel 3 erhaltenen Polymerisats in einem Gemisch aus

50 Tl Testbenzin mit einem Siedebereich von 130 – 175°C,
33 Tl Weißöl (Erdölfraktion) mit einem Siedebereich von 350 – 525°C,
1 Tl Sorbitanmonooleat und
1 Tl eines Adduktes von 12 Mol AEO an 1 Mol Nonylphenol)

werden an einem Schnellrührer in

785 Gewichtsteile Wasser eingerührt. Anschließend werden nacheinander
60 Gewichtsteile einer ca. 40%igen handelsüblichen Copolymerisat-Dispersion auf Polyacrylatbasis,
60 Gewichtsteile einer entsprechenden Copolymerisatdispersion auf Butandien-Acrylnitril-Basis,
20 Gewichtsteile eines Harzes auf Harnstoff-Formaldehyd-Basis,
25 Gewichtsteile einer 30%igen wäßrigen Dispersion des Pigments mit der C.I. Nr. 71 105 sowie
10 Gewichtsteile einer 33,3%igen wäßrigen Lösung einer anorganischen säureabspaltenden Verbindung aufgebracht.

Der orangefarbene Pigmentdruck besitzt nach dem Trocknen und dem 5minütigem Fixieren bei 180°C auf einem Hochtemperatur-Dämpf-Aggregat einen weichen Griff mit guter Reib-, Schrubb- und Lösungsmittelechtheit sowie hoher Brillanz und Egalität.

## Beispiel 8

Auf ein Polyester-Baumwoll-Mischgewebe wird im Flachfilmdruck eine wie folgt herzustellende Druckfarbe in der üblichen Weise aufgebracht.

25 Gewichtsteile der 16%igen Dispersion (hergestellt durch Dispergieren von 16 Gewichtsteilen des nach Beispiel 3 erhaltenen Polymerisats in einem Gemisch aus

50 Tl Testbenzin mit einem Siedebereich von 130 – 175°C.
33 Tl Weißöl (Erdölfraktion) mit einem Siedebereich von 350 – 525°C.
1 Tl Sorbitanmonooleat und
1 Tl eines Adduktes von 12 Mol AEO an 1 Mol Nonylphenol)

werden an einem Schnellrührer in

455 Gewichtsteile Wasser eingerührt. Anschließend werden nacheinander
120 Gewichtsteile einer handelsüblichen, ca. 40%igen Copolymerisatdispersion auf Polyacrylatbasis,
15 Gewichtsteile eines Mischharzes auf Melamin-Harnstoff-Formaldehydbasis,
25 Gewichtsteile der 37%igen wäßrigen Dispersion des Pigmentes mit der C.I. Nr. 74 160 und 10 Gewichtsteile der 33,3%igen wäßrigen Lösung einer anorganischen säureabspaltenden Verbindung zugegeben.

Zum Schluß werden noch

150 Gewichtsteile Schwerbenzin vom Siedeintervall 180–230° C einemulgiert.

Die Fixierung erfolgt nach dem Trocknen durch Erhitzen auf 180° C während 2 Minuten. Der lebhafte blaue Druck zeichnet sich durch gute Egalität und gute Echtheitseigenschaften aus, insbesondere der Griff ist besser als bei konventionell hergestellten Drucken.

## Patentansprüche

1. Verfahren zur Herstellung von vernetzten Copolymerisaten, deren Polymerenketten folgende Zusammensetzung aufweisen

k–p Mol.-% Gruppen der Formel 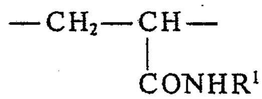

p Mol.-% Gruppen der Formel 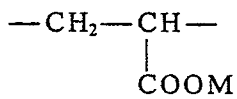

0 bis 45 Mol.-% Gruppen der Formel 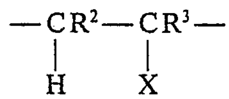

und 0,1 bis 20 Mol.-% eines Vernetzers,

wobei

$R^1$ im statistischen Mittel zu 0 bis 100% Wasserstoff und zu 100 bis 0%, jeweils bezogen auf den Anteil von k–p Mol-%, $-CH_2OH$-Gruppen,
$R^2$ und $R^3$ Wasserstoff oder einer der Reste $R^2$ und $R^3$ eine Methylgruppe, der andere Wasserstoff,
X Cyan, Alkoxycarbonyl mit insgesamt 1 bis 8 C-Atomen im Alkoxyrest, Alkoxycarbonyl, dessen Alkoxyrest durch –OH substituiert ist und 2 bis 8 C-Atome besitzt, >COOM, Alkanoyloxy mit insgesamt 2 bis 6 C-Atomen, Alkanoylamino mit insgesamt 2 bis 8 C-Atomen, das, sofern es mindestens 4 C-Atome besitzt, auch cyclisch sein kann und dann einen Pyrrolidon-, Piperidon- oder Caprolactamring bildet, Phenyl oder Trialkoxysilyl mit 1 bis 2 C-Atomen in den Alkoxygruppen,
M ein Alkalimetall-Kation bedeuten und
k für den Bereich 99,9 bis 50 und
p für den Bereich 5 bis k stehen,

dadurch gekennzeichnet, daß man, bezogen auf die gesamte Mol-Menge aller Monomeren, k Mol-% Acrylamid, wobei k die oben angegebene Bedeutung hat, 0 bis 45 Mol-% einer Verbindung der Formel I

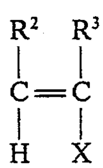

(I)

worin $R^2$, $R^3$ und X die oben angegebenen Bedeutungen haben,
und 0,1 bis 20 Mol-% eines Vernetzers in Gegenwart eines radikalischen Initiators in einem mit Wasser mischbaren Alkanol mit 1 bis 4 C-Atomen, der nicht mehr als 10% Wasser enthält, copolymerisiert, die erhaltene Polymerisatdispersion unter Einwirkung starker Scherkräfte mit p Mol-% eines Alkalihydroxyds der Formel MOH, worin p die oben angegebene Bedeutung hat, mischt und bis zur Verseifung von p Mol-% Amidgruppen zu –COOM-Gruppen auf 30 bis 150° C erwärmt und das erhaltene Copolymerisat entweder isoliert oder, nach Entfernung des Ammoniaks, in einem niederen Alkanol mit 0 bis (k–p) Mol-% Paraformaldehyd, wobei k und p die oben angegebenen Bedeutungen haben, bei Temperaturen zwischen 10° C und dem Siedepunkt des eingesetzten niederen Alkanols methyloliert.

2. Verfahren gemäß Anspruch 1, dadurch gekennzeichnet, daß in Formel I

$R^2$ Wasserstoff,
$R^3$ Wasserstoff oder Methyl und
X Cyan, Alkoxycarbonyl mit 1 bis 8 C-Atomen im Alkoxyrest, Alkoxycarbonyl, dessen Alkoxyrest durch $-OH$ substituiert ist und 2 bis 8 C-Atome besitzt, Carbonxyl, Acetoxy, N-Pyrrolidonyl, Phenyl oder Triäthoxysilyl bedeuten.

3. Verfahren gemäß den Ansprüchen 1 und 2, dadurch gekennzeichnet, daß es als Vernetzter eine Verbindung der Formel

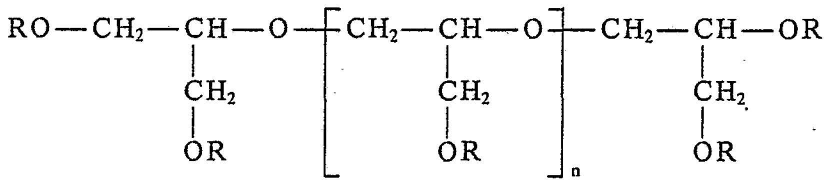

worin

n für eine Zahl von 0 bis 30 steht und
R zu 70 bis 5% Wasserstoff sowie zu 95 bis 30% Gruppen der Formel $-CH_2-CH=CH_2$ oder $-CH_2-C(CH_3)=CH_2$ bedeutet, aufweist.

4. Verfahren gemäß den Ansprüchen 1 bis 3, dadurch gekennzeichnet, daß man die Polymerisatdispersion mit 30 bis 70 Mol-% eines Alkalihydroxyds der Formel MOH mischt und bis zur Verseifung von 30 bis 70 Mol-% Amidgruppen zu $-COOM$-Gruppen erwärmt.

5. Verfahren gemäß den Ansprüchen 1 bis 4, dadurch gekennzeichnet, daß man das Copolymerisat mit 0,8 (k − p) bis 1 (k − p) Mol-% Paraformaldehyd methyloliert.

6. Verwendung der vernetzten Copolymerisate hergestellt gemäß den Ansprüchen 1 bis 5 als Verdickungsmittel beim Pigmentdruck.

## Claims

1. Process for the preparation of crosslinked copolymers whose polymer chains have the following composition:

k−p mole % groups of the formula 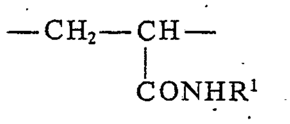

p mole % groups of the formula 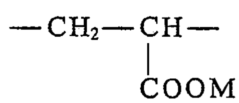

0 to 45 mole % groups of the formula 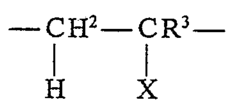

and 0.1 to 20 mole % of a crosslinking agent,

wherein

$R^1$ denotes, in the statistical mean, 0 to 100% hydrogen and 100 to 0% $-CH_2OH$-groups, in each case relative to the proportion of k − p mole %,
$R^2$ and $R^3$ denote hydrogen, or one of the radicals $R^2$ and $R^3$ denotes a methyl group, the other denotes hydrogen,
X denotes cyano, alkoxycarbonyl with a total of 1 to 8 C atoms in the alkoxy radical, alkoxy carbonyl, wohose alkoxy radical is substituted by OH and has 2 to 8 C atoms, $-COOM$, alkanoyloxy with a total of 2 to 6 C atoms, alkanoylamino with a total of 2 to 8 C atoms, which, in so far as it has at least 4 C atoms, may also be cyclic and then forms a pyrrolidone ring, piperidone ring or caprolactam ring, phenyl or trialkoxysilyl with 1 to 2 C atoms in the alkoxy groups,
M denotes an alkali metal cation and
k stands for the range of 99.9 to 50 and
p stands for the range of 5 to k,

characterised in that, relative to the total molar amount of all monomers, k mole % acrylamide, k having the meaning stated above, 0 to 45 mole % of a compound of the formula I

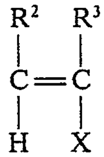

(I)

wherein $R^2$, $R^3$ and X have the meanings stated above, and 0.1 to 20 mole % of a crosslinking agent are copolymerised in the presence of a radical initiator in a water-miscible alkanol having 1 to 4 C atoms and containing not more than 10% water, the polymer dispersion obtained is, with the action of strong shearing forces, mixed with p mole % of an alkali metal hydroxide of the formula MOH, wherein p has the meaning stated above, and is heated to 30 to 150°C until the saponification of p mole % amide groups to give $-COOM$ groups, and the copolymer obtanied is either isolated or, after removal of the ammonia, is methylolated in a lower alkanol with 0 to $(k-p)$ mole % paraformaldehyde, k and p having the meanings stated above, at temperatures between 10°C and the boiling point of the lower alkanol used.

2. Process according to claim 1, characterised in that in the formula I

- $R^2$ denotes hydrogen,
- $R^3$ denotes hydrogen or methyl and
- X denotes cyano, alkoxycarbonyl with 1 to 8 C atoms in the alkoxy radical, alkoxy carbonyl whose alkoxy radical is substituted by OH and has 2 to 8 C atoms, carbonyl, acetoxy, N-pyrrolidonyl, phenyl or triethoxysilyl.

3. Process according to claims 1 and 2, characterised in that as crosslinking agent, it has a compound of the formula

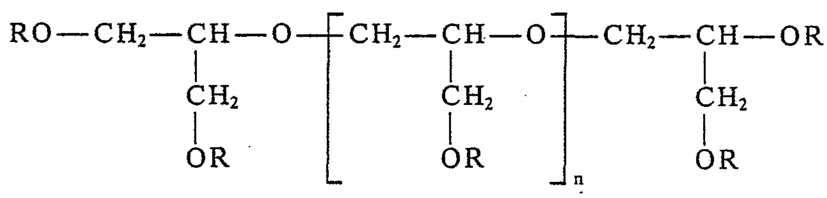

wherein

- n represent a number from 0 to 30, and
- R denotes 70 to 5% hydrogen and 95 to 30% groups of the formula $-CH_2-CH=CH_2$ or $-CH_2-C(CH_3)=CH_2$.

4. Process according to claims 1 to 3, characterised in that the polymer dispersion is mixed with 30 to 70 mole % of an alkali metal hydroxide of the formula MOH and heated until the saponification of 30 to 70 mole % groups groupe to give $-COOM$ groups.

5. Process according to claims 1 to 4, characterised in that the copolymer is methylolated with 0.8 $(k-p)$ to 1 $(k-p)$ mole % paraformaldehyde.

6. Use of the crosslinked copolymers prepared in accordance with claims 1 to 5 as thickeners in pigment printing.

**Revendications**

1. Procédé de préparation de copolymères réticulés dont les chaînes polymères possèdent la composition suivante:

k−p moles % de groupes de formule 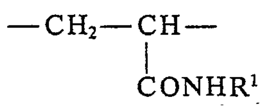

p moles % de groupes de formule 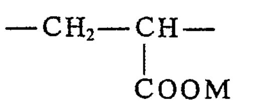

0 à 45 moles % de groupes de formule 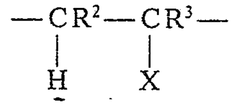

et 0,1 à 20 moles % d'un agent réticulant, étant précisé que

$R^1$ représente en moyenne statistique l'hydrogène pour 0 à 100% et des groupes $-CH_2OH$ pour 100 à 0%, dans les deux cas par rapport à la fraction de k − p moles %,
$R^2$ et $R^3$ représentent l'hydrogène ou bien l'un des symboles $R^2$ et $R^3$ représente un groupe méthyle et l'autre l'hydrogène,
X représente un groupe cyano, alcoxycarbonyle contenant au total 1 à 8 atomes de carbone dans le radical alcoxy, alcoxycarbonyle dont le radical alcoxy porte un subtituant −OH et contient de 2 à 8 atomes de carbone, −COOM, alcanoyloxy contenant au total 2 à 6 atomes de carbone, alcanoylamino contenant au total de 2 à 8 atomes de carbone et qui, pour autant qu'il contienne au moins 4 atomes de carbone, peut également être cyclique et forme alors un cycle de pyrrolidone, de pipéridone ou de caprolactame, phényle ou trialcoxysilyle contenant 1 à 2 atomes de carbone dans les groupes alcoxy,
M représente un cation de métal alcalin et
k se situe dans l'intervalle de 99,9 à 50 et
p dans l'intervalle de 5 à k,

caractérisé en ce que l'on copolymérise, par rapport à la quantité molaire totale de tous les monomères, k moles % d'acrylamide, k ayant la signification indiquée ci-dessus, 0 à 45 moles % d'un composé de formule I

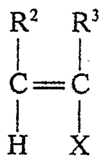 (I)

dans laquelle $R^2$, $R^3$ et X ont les significations indiquées ci-dessus,
et 0,1 à 20 moles % d'un agent réticulant, en présence d'un inducteur radicalaire, dans un alcanol en $C_1-C_4$ miscible à l'eau et qui ne contient plus de 10% d'eau, on mélange la dispersion de polymère obtenue, sous l'action de forces puissantes de cisaillement, avec p moles % d'un hydroxyde alcalin de formule MOH, p ayant la signification indiquée ci-dessus, et on chauffe à une température de 30 à 150°C jusqu'à saponification de p moles % de groupes amides en groupes −COOM, et ou bien on isole le copolymère obtenu ou bien, après élimination de l'ammoniac, on le soumet à méthylolation dans un alcanol inférieur par 0 à (k − p) moles % de paraformaldéhyde, k et p ayant les significations indiquées ci-dessus, à des températures comprises entre 10°C et le point d'ébullition de l'alcanol inférieur mis en oeuvre.

2. Procédé selon la revendication 1, caractérisé en ce que, dans la formule I,

$R^2$ représente l'hydrogène,
$R^3$ représente l'hydrogène ou le groupe méthyle et
X représente un groupe cyano, alcoxycarbonyle contenant 1 à 8 atomes de carbone dans le radical alcoxy, alcoxycarbonyle dont le radical alcoxy porte un substituant −OH et contient de 2 à 8 atomes de carbone, carboxyle, acétoxy, N-pyrrolidonyle, phényle ou triéthoxysilyle.

3. Procédé selon les revendications 1 et 2, caractérisé en ce que l'on utilise en tant qu'agent réticulant un composé de formule

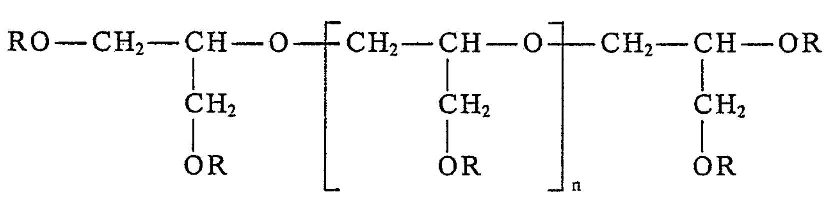

dans laquelle

n est un nombre de 0 à 30 et
R représente l'hydrogène pour 70 à 5% et des groupes de formule $-CH_2-CH=CH_2$ ou $-CH_2-C(CH_3)=CH_2$ pour 95 à 30%.

4. Procédé selon les revendications 1 à 3, caractérisé en ce que l'on mélange la dispersion de polymère avec 30 à 70 moles % d'hydroxyde alcalin de la formule MOH et on chauffe jusqu'à saponification de 30 à 70 moles % de groupes amides en groupes –COOM.

5. Procédé selon les revendications 1 à 4, caractérisé en ce que l'on méthylole le copolymère par 0,8 (k–p) à 1 (k–p) moles % de paraformaldéhyde.

6. Utilisation des copolymères réticulés préparés selon les revendications 1 à 5 comme agents épaississants en impression pigmentaire.